# EUROPÄISCHE PATENTANMELDUNG

(11) **EP 2 679 875 A1**
(43) Veröffentlichungstag der Anmeldung: **01.01.2014**
(21) Anmeldenummer: 13003081.0
(22) Anmeldetag: 17.06.2013
(51) Int. Cl.: F16L 47/06, F16L 55/132, B29C 57/04

(54) **Spreizpfropfen für Kunststoffrohre**

(30) Priorität: 27.06.2012 IT BZ20120026
(71) Anmelder: Enetec Ecoform Srl, 39057 Appiano Frazione Frangarto (BZ) (IT)
(72) Erfinder: Pezzei, Cleto, 39057 Appiano (BZ) (IT)
(74) Vertreter: Oberosler, Ludwig

(57) **Zusammenfassung**

Spreizpfropfen für Kunststoffrohre bestehend aus einem äußeren Spreizteil (1) mit mindestens zwei Backen (1c) welche sich parallel zur Achse des Spreizteiles erstrecken, zwischen welche eine Betätigungsschraube (2) eindrehbar (R) ist, wobei die einzelnen Backen (1c) an der, der Längsachse des Spreizteiles (1) zugewandten, Seite ein konisches Gewinde (1e) mit größerem Durchmesser nahe am ringförmigen Kopf (1a) des Spreizteiles aufweisen und der Bolzen (2b) der Betätigungsschraube (2) ein, dem Gewinde an den Backen (1c) entsprechendes, Gewinde mit dem größeren Durchmesser nahe am Kopf (2a) der Betätigungsschraube (2) aufweist, wobei die Backen (1 c) an einer der Stirnflächen des ringförmigen Kopfes (1a) über einen Bereich mit Querschnittsverminderung (1 b) einstückig verbunden sind und dieser Bereich als Scharnier und als elastisches Anpassungselement zwischen dem Kopf (1a) und den einzelnen Backen (1c) wirkt, so dass diese, während der radialen Spreizbewegung (E) nach außen, immer eine, zur Längsachse des Spreizteiles (1), parallele Position einnehmen.

## Beschreibung

Es sind Verbindungsstücke und Anschlussstücke aus Metall oder Kunststoff für biegsame Kunststoffrohre bekannt welche für Wasserversorgungsanlagen und für Bodenheizungsanlagen verwendet werden. Zwecks dichter und sicherer Anbringung dieser Verbindungs- und Anschlussstücke wird ein, z.B. hydraulisch betriebenes, Werkzeug eingesetzt mittels welchem das Rohrende ausgeweitet wird um anschließend das Anschlussstück problemlos ins Rohrende einsetzen zu können und dieses dann am Rohr sichern zu können, indem außen am Rohr eine Buchse über den Verbindungsbereich geschoben wird um die Rohrwand gegen das Anschlussstück zu pressen wodurch eine dichte Verbindung hergestellt wird.

Es ist weiters bekannt dass auf den Baustellen, Schmutzteilchen wie Sand, Staub und kleine Tiere ins Innere der dort aufbewahrten oder installierten Rohre für die Wasserversorgung oder für die Heizungsanlage dringen weil diese noch nicht untereinander verbunden sind; um dies zu verhindern werden, insbesondere die Rohre mit größerem Durchmesser, an Ihren Enden mit Kunststoffstöpsel versehen. Die Rohre mit relativ kleinem Durchmesser werden normalerweise nicht mit Stöpsel versehen, die pflichtbewussten Arbeiter verschließen die offenen Enden dieser Rohre, insbesondere nachdem diese verlegt worden sind, z.B. mit Papier, Karton und/oder mit Klebeband.

Aus der WO 98/58179 A2 ist die Verbindung zweier rohrförmiger Körper bekannt. Dabei wird eine Hülse innen in einem rohrförmigen Körper mittels Kleber befestigt. Um die Festigkeit dieser Verklebung gegen Scherkräfte und/oder gegen Torsionsbelastung zu erhöhen wird die Hülse radial mittels zweier, zueinander axial verschiebbarer, Hülsen mit gegeneinander konisch wirkender Außenmantelfläche, bzw. Innenmantelfläche, an die Klebefläche, bzw. an die Innenfläche des rohrförmigen Körpers angepresst. Dabei wird zwar die Hülse leicht ausgeweitet aber nicht der äußere Rohrkörper ausgeweitet und die Verbindung erfolgt durch Verklebung, nicht durch elastische Rückverformung des äußeren Rohrkörpers. Gemäß einer im selben Dokument angeführten Variante (Fig. 7a, 7b) wird durch Eindrehen eines ersten Elementes mit zylindrischem Außengewinde in ein, mit Innengewinde versehenes, im Rohrkörper zu verklebendes, Element, ein zweites konisches Element axial verschoben welches auf seitlich bewegliche Backen des im Rohrkörper zu verklebenden Elements wirkt um diese an die Innenfläche des Rohrkörpers zu drücken und daran zu verkleben um eine gegen Scher- und Torsionsbelastung resistentere Verbindung herzustellen; der Rohrkörper wird dabei nicht ausgeweitet.

Diese Vorrichtungen sind nicht geeignet um das Ende von Kunststoffrohren so stark zylinderförmig auszuweiten, dass bequem zylindrische Anschlussstücke eingesetzt und durch Aufschieben einer Außenbuchse, ohne Kleber, am Rohrende befestigt werden können. Weiters sind die gezeigten und beschriebenen Vorrichtungen nicht wiederholt als Verschlusspfropfen und als Ausweitungswerkzeug verwendbar.

Aus der US 4,768,560 ist ein Verschlusspfropfen für Rohre bekannt welcher aus einer elastischen Muffe mit konischem Innengewinde und aus einem nicht elastischem "Expander" mit entsprechendem konischem Außengewinde besteht. Durch Eindrehen des Expanders in die Muffe wird diese radial ausgeweitet und legt sich dicht an die Innenwand des Rohres an. Diese Vorrichtung kann nur als Verschlusspfropfen verwendet werden, es kann nur ein relativ kleiner Anpressdruck zwischen der Muffenaußenfläche und der Rohrinnenfläche erreicht werden weil ein kraftvolles Eindrehen des Expanders eine hohe Reibung am Innengewinde der elastischen Muffe bewirken würde; auf keinen Fall könnte somit das Ausweiten des Rohrendes erzielt werden.

Aus der US 4,768,560 ist ein Verschlusspfropfen für Rohre bekannt; dieser besteht aus einer elastischen Muffe mit konischem Innengewinde und einem nicht elastischem "Expander" mit entsprechendem konischem Außengewinde. Durch Eindrehen des Expanders in die Muffe wird diese radial gedehnt um sich dicht an die Innenwand des Rohres anzulegen. Diese Vorrichtung kann nur als Verschlusspfropfen verwendet werden, es kann nur ein relativ geringer Anpressdruck erreicht werden weil ein kraftvolles Eindrehen des Expanders eine hohe Reibung am Innengewinde der Muffe bewirken würde; auf keinen Fall könnte das Ausweiten des Rohrendes erzielt werden.

Die Erfindung stellt sich die Aufgabe einen Pfropfen aus Kunststoff für biegsame Kunststoffrohre mit relativ kleinem Durchmesser zu schaffen, welcher bequem einsetzbar ist und geeignet ist die Ausweitung des Rohrendes zu erreichen um dieses für den bequemen Einsatz eines Anschluss- oder Verbindungsstückes vorzubereiten.

Diese Aufgabe wird erfindungsgemäß dadurch gelöst, dass ein Pfropfen vorgeschlagen wird welcher aus einem zylindrischen hohlen Spreizteil besteht in welches eine Betätigungsschraube koaxial eindrehbar ist. Dieser Spreizteil ist mit mindestens zwei, vorzugsweise mit mehreren, z.B. mit sechs, Backen versehen welche an der Innenseite ein konisches Gewinde aufweisen, zwischen welchen eine Betätigungsschraube mit entsprechendem konischem Gewinde eindrehbar ist, um durch das progressive Eindrehen das radiale Spreizen aller Backen nach außen zu erreichen. Wird dieser Spreizteil mit seinen Backen in das Ende eines flexiblen Kunststoffrohres eingesetzt und wird die Schraube mit konischem Gewinde, in einem ersten Moment, durch Anwendung eines minimalen Drehmomentes am Kopf der besagten Schraube durch die bloße Hand, ohne Werkzeug eingedreht, so wird das Festklammern der außen an den Backen vorgesehenen Vorsprünge an der Innenfläche des Rohres bewirkt wodurch der Pfropfen in Verschlussposition im Rohrende gesichert ist.

Durch mehr Kraftanwendung am Schraubenkopf hingegen, z.B. mittels eines Schraubenschlüssels, wird erreicht, dass die Backen radial weiter nach außen gespreizt werden, wodurch das Rohrende ausgeweitet wird und für den bequemen Einsatz eines Anschlussstückes bereitgestellt wird, nachdem der Spreizpfropfen, durch Herausdrehen der Betätigungsschraube, entfernt worden ist.

Um die radiale Spreizbewegung der Backen des Spreizteiles, in Bezug zum ringförmigen unverformbaren Kopf des Spreizteiles, zu begünstigen, ist im Bereich zwischen dem Kopf und den einzelnen Backen eine Querschnittsverminderung vorgesehen, z.B. indem in diesem Bereich eine Innenrille vorgesehen ist so, dass dieser Bereich mit vermindertem, geschwächtem Querschnitt, leicht verformbar ist um als Scharnier und als anpassungsfähige Verbindung zu wirken. Es wird jedoch nicht eine verformbare Verbindung zwischen den Backen und dem ringförmigen Kopf über Scharniere oder Gelenke ausgeschlossen.

Der ringförmige Kopf des Spreizteiles wird nicht in das Rohr eingesetzt und hat vorteilhafterweise eine Außenform welche geeignet ist einen Schraubenschlüssel oder ein anderes geeignetes Werkzeug anzusetzen, um zu verhindern dass, während des Ein- oder Herausdrehen der Betätigungsschraube, das Spreizteil mitgedreht wird. Der Schraubenkopf kann z.B. eine sechseckige oder quadratische Form haben, sie kann einen Sitz für den Einsatz eines Inbusschlüssels oder eines Schraubendrehers aufweisen.

Der Spreizpfropfen für Kunststoffrohre ist also leicht, ohne Werkzeuge, zwecks Verhindern des Eindringens von Gegenständen oder Lebewesen an den Rohrenden anbringbar und abnehmbar; zudem ist er verwendbar um das Rohrende zylindrisch auszuweiten und es dadurch für den Einsatz von zylindrischen Anschluss- und Verbindungsstücken mittels eines einfachen Schraubenschlüssel oder eines Schraubendrehers vorzubereiten, ohne dabei sperrige Spreizvorrichtungen anwenden zu müssen welche hydraulisch betätigt werden; der selbe Spreizpfropfen kann immer wieder verwendet werden und zwar wahlweise, sei es als Verschlusspfropfen als auch als Spreizwerkzeug für Rohrenden.

Die Erfindung wird anschließend, anhand eines erfindungsgemäßen vorzuziehenden Ausführungsbeispieles eines in den Zeichnungen schematisch dargestellten Spreizpfropfens, näher erklärt; dabei haben die Zeichnungen rein erklärenden, nicht begrenzenden Zweck.

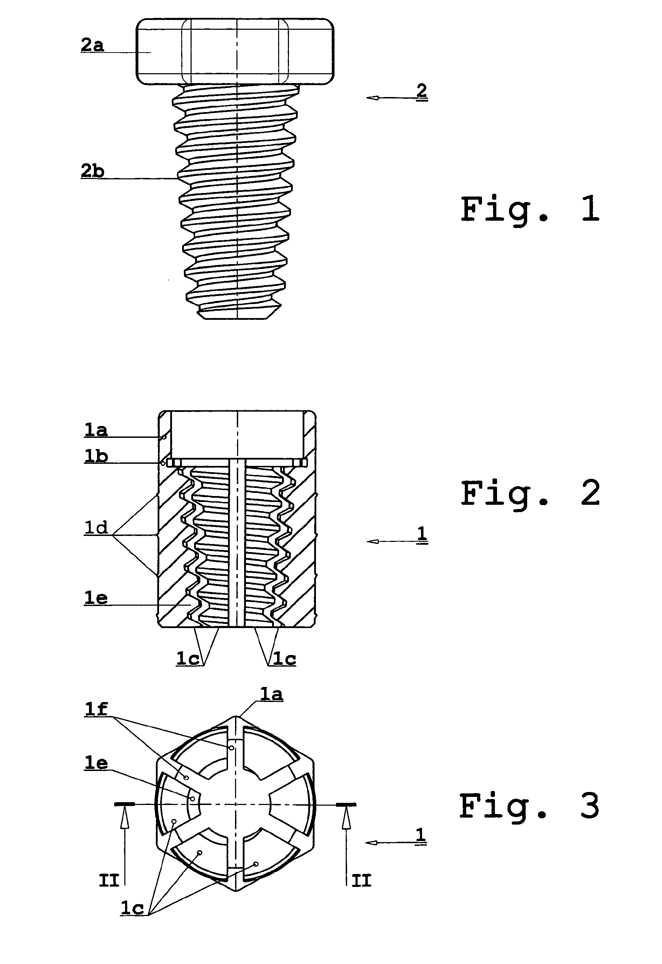

Die Fig. 1 zeigt in Seitenansicht die Betätigungsschraube mit Sechskantkopf und konischem Gewindebolzen eines erfindungsgemäßen Spreizpfropfens für biegsame Kunststoffrohre.

Die Fig. 2 zeigt das Spreizteil eines erfindungsgemäßen Spreizpfropfens im Längsschnitt gemäß der in der folgenden Fig. 3 gezeigten Schnittebene II-II.

Die Fig. 3 zeigt den in Fig. 2 dargestellten Spreizpfropfen von unten gesehen.

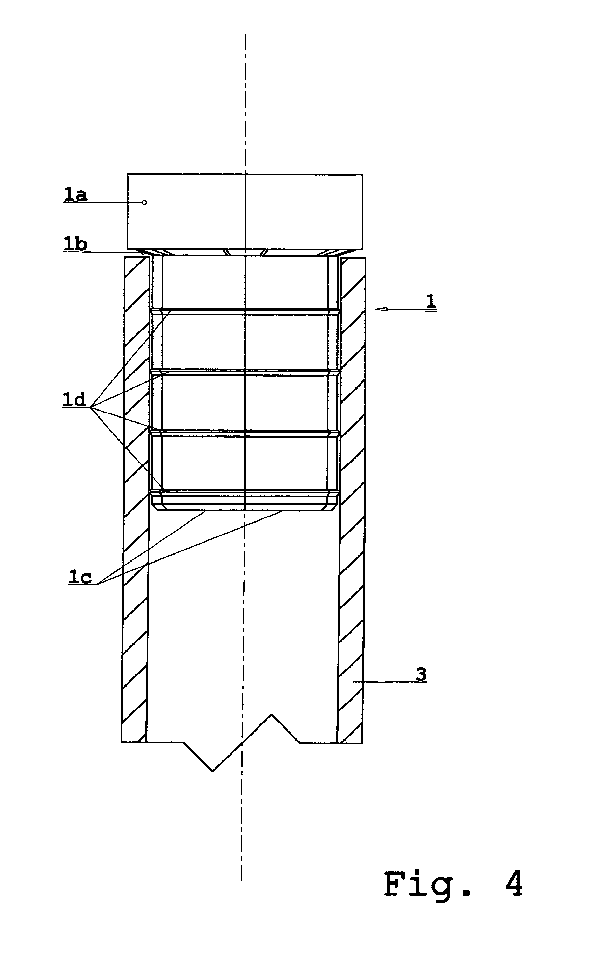

Die Fig. 4 zeigt den erfindungsgemäßen Spreizpfropfen eingesetzt in ein, im Längsschnitt dargestelltes Rohrende, die einzelnen Backen des Spreizteiles berühren sich gegenseitig seitlich und bilden einen Außendurchmesser welcher kleiner ist als der ringförmige unverformbare Kopf des Spreizteiles welcher nicht ins Rohr eingesetzt ist.

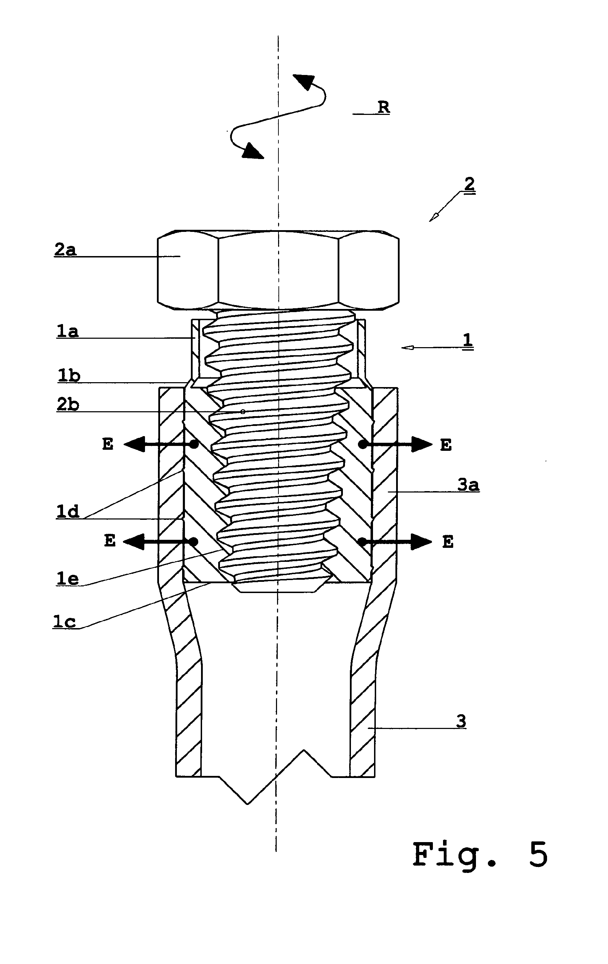

Die Fig. 5 zeigt im Längsschnitt ein flexibles Kunststoffrohr in welches ein erfindungsgemäßer Spreizpfropfen eingesetzt ist, wobei die Betätigungsschraube fast vollständig in das Spreizteil eingedreht ist und die Backen eine gespreizte Position einnehmen durch welche der Endbereich des Kunststoffrohres zylindrisch ausgeweitet wird.

Der erfindungsgemäße Spreizpfropfen besteht aus einem Spreizteil 1 aus elastischem Kunststoff in welches axial R eine Betätigungsschraube 2 eindrehbar ist. Das Spreizteil besteht aus einem ringförmigen Kopf 1a welcher z.B. eine sechseckige oder quadratische, für einen Schraubenschlüssel geeignete, Außenform hat, unterhalb des ringförmigen Kopfes weist das Spreizteil sechs längliche Backen 1c auf welche sektorförmigen Querschnitt haben, außen Verankerungsvorsprünge 1d und innen ein konisches Gewinde 1e aufweisen. Im Bereich der Verbindung zwischen dem ringförmigen Kopf 1a des Spreizteiles 1 und der einzelnen Backen 1c ist ein Bereich mit vermindertem Querschnitt 1b vorgesehen welcher z.B. durch eine Innenrille definiert ist so dass dieser, durch elastische Verformung, als Scharnier und auch als Anpassungsbereich zwischen dem ringförmigen Kopf 1a des Spreizteiles 1 und den einzelnen Backen 1c wirken kann. Der Kopf 1a des Spreizteiles 1 kann auch mit einem oder mit mehreren radialen Vorsprüngen versehen sein so dass einem eventuellen Verdrehen des Spreizteiles, während dem Eindrehen R der Betätigungsschraube 2, händisch entgegengewirkt werden kann. Die Verankerungsvorsprünge 1d können derartige Form und Ausrichtung haben, dass während des Eindrehens R der Betätigungsschraube 2, sei es dem Auswurf als auch der Verdrehung des Spreizteiles, entgegengewirkt wird.

Die Betätigungsschraube 2 weist einen sechseckigen Kopf 2a auf und hat einen Bolzen 2b mit konischem Gewinde welches dem konischen Innengewinde 1e an den einzelnen Backen 1c des Spreizteiles 1 entspricht.

Das Spreizteil 1, ohne Betätigungsschraube 2 oder mit knapp zwischen die Backen 1c des Spreizteiles 1 eingeschraubter Betätigungsschraube 2, ist axial in das Ende eines flexiblen Kunststoffrohres, über die gesamte Länge der Backen 1c, einsetzbar, dabei können sich diese aneinander so anlegen, dass die Zwischenräume 1f teilweise oder gänzlich verschwinden, wobei die Verbindungsbereiche mit vermindertem Querschnitt 1d, zwischen den Backen 1c und dem ringförmigen Kopf 1a des Spreizteiles 1, elastisch verformt werden.

Durch anschließendes, eventuell händisches, Eindrehen R der Betätigungsschraube 2 in das Spreizteil 1 wird eine leichte Spreizung E der einzelnen Backen, senkrecht zur Achse des Spreizteiles 1 und somit die Verankerung des Pfropfens innen am Rohr 3 bewirkt. Infolge dieser Verankerung funktioniert die Vorrichtung als Verschluss gegen das Eindringen von Schmutz oder von Lebewesen in das Innere des Rohres 3, durch Herausdrehen R der Betätigungsschraube 2 kann der Pfropfen leicht entfernt werden und eventuell in das Ende eines anderen Rohres, mit gleichem oder ähnlichem Innendurchmesser, angebracht werden.

Um das Ausweiten des Endes 3a des Rohres 3 zu erreichen, um anschließend bequem ein Anschlussstück oder dergleichen einsetzen zu können, muss die Betätigungsschraube, unter Anwendung eines gewissen Drehmomentes und über den Großteil der Erstreckung des konischen Gewindebolzens 2b der Schraube 2, z.B. mittels Werkzeug, mittels Schraubendreher oder Inbusschlüssel, weiter eingedreht werden. Dieses kraftvolle Eindrehen R bewirkt das radiale bemerkenswerte Spreizen E der einzelnen Backen 1c senkrecht zur Achse des Rohres 3, bzw. zur Achse des Spreizteiles 1. Die radiale Spreizbewegung E der einzelnen Backen 1c in Bezug auf den ringförmigen Kopf 1a des Spreizteiles 1 ist dadurch möglich, dass eine Querschnittsverminderung 1b zwischen dem unteren Rand des ringförmigen Kopfes 1a und den obern Enden der Backen 1c vorgesehen ist; dieser Bereich mit Querschnittsverminderung wirkt als Scharnier und auch als elastischer Anpassungsbereich zwischen dem ringförmigen, nicht verformbaren Kopf 1a und den progressiv, durch das kraftvolle Eindrehen R der Betätigungsschraube 2, gespreizten E einzelnen Backen 1c.

Der Bereich mit vermindertem Querschnitt 1b wird dadurch realisiert dass innen, zwischen dem Kopf 1a und den Backen 1c, eine Rille vorgesehen ist, ohne auszuschließen, dass diese Querschnittverminderung auch durch eine äußere Rille oder auch durch eine äußere und eine innere Rille realisiert werden könnte.

Wegen der entsprechenden und gegenläufigen Konizität des Gewindes am Bolzen 2b der Betätigungsschraube 2, bezogen auf das Innengewinde 1e an den einzelnen Backen 1c bewirkt dass die Spreizbewegung E der Backen 1c, während des progressiven Eindrehens R der Schraube 2 derart erfolgt dass diese Backen mit ihrer Längsaußenfläche sich an der Innenfläche des Rohres 3 anliegend und parallel zur Achse des Rohres 3 ausrichten, wobei die Ausweitung des Endes 2a des Rohres 3 in zylindrischer Form mit einem kurzen konischen Übergangsbereich zwischen dem nicht ausgeweiteten Rohr und dem ausgeweiteten Rohrende, erfolgt.

## Patentansprüche

1. Spreizpfropfen für Kunststoffrohre bestehend aus einem äußeren Spreizteil (1) mit mindestens zwei Backen (1c) welche sich parallel zur Achse des Spreizteiles erstrecken, zwischen welche eine Betätigungsschraube (2) eindrehbar (R) ist, wobei die einzelnen Backen (1c) an der, der Längsachse des Spreizteiles (1) zugewandten, Seite ein konisches Gewinde (1e) mit größerem Durchmesser nahe am ringförmigen Kopf (1a) des Spreizteiles aufweisen und der Bolzen (2b) der Betätigungsschraube (2) ein, dem Gewinde an den Backen (1c) entsprechendes, Gewinde mit dem größeren Durchmesser nahe am Kopf (2a) der Betätigungsschraube (2) aufweist, **dadurch gekennzeichnet, dass** die Backen (1c) an einer der Stirnflächen des ringförmigen Kopfes (1a) über einen Bereich mit Querschnittsverminderung (1b) einstückig verbunden sind wobei dieser Bereich als Scharnier und als elastisches Anpassungselement zwischen dem Kopf (1a) und den einzelnen Backen (1c) wirkt, so dass diese, während der radialen Spreizbewegung (E) nach außen, immer eine, zur Längsachse des Spreizteiles (1), parallele Position einnehmen.

2. Spreizpfropfen für Kunststoffrohre gemäß Anspruch 1, **dadurch gekennzeichnet, dass** der ringförmige Kopf (1a) des Spreizteiles eine sechseckige, eine quadratische oder eine, für das Festhalten von Hand oder mittels Werkzeug, geeignete Außenform hat.

3. Spreizpfropfen für Kunststoffrohre gemäß Anspruch 1, **dadurch gekennzeichnet, dass** der Kopf (2a) der Betätigungsschraube (2) sechseckige oder quadratische Außenform hat und/oder Einbuchtungen, Einschnitte oder Vorsprünge aufweist um das Ansetzen bekannter oder spezifischer Werkzeuge und/oder ein sicheres händisches Ergreifen und Betätigen zu ermöglichen.

4. Spreizpfropfen für Kunststoffrohre gemäß Anspruch 1, **dadurch gekennzeichnet, dass** die einzelnen Backen (1c) an ihrer Außenfläche mit Vorsprüngen (1d) versehen sind welche das axiale Auswerfen und die Rotation des Spreizteiles (1) während des kraftvollen Eindrehens (R) der Betätigungsschraube verhindern.
